# EUROPÄISCHE PATENTSCHRIFT

(11) **EP 2 095 898 B1**
(45) Veröffentlichungstag und Bekanntmachung des Hinweises auf die Patenterteilung: **12.06.2013**
(21) Anmeldenummer: 09000255.1
(22) Anmeldetag: 10.01.2009
(51) Int. Cl.: B23B 31/00, B23B 31/16

(54) **Spannvorrichtung**
Clamping device
Dispositif de serrage

(30) Priorität: 26.02.2008 DE 102008011251
(43) Veröffentlichungstag der Anmeldung: 02.09.2009
(73) Patentinhaber: Maschinenfabrik Reinhausen GmbH, 93059 Regensburg (DE)
(72) Erfinder: Jobst, Norbert, 93333 Neustadt an der Donau/Mühlhausen (DE)

(56) Entgegenhaltungen:
- DE-A1- 2 003 621
- FR-A- 1 256 940
- US-A1- 2008 018 060

## Beschreibung

Die Erfindung betrifft eine Spannvorrichtung zum Aufspannen von Werkstücken an Werkzeugmaschinen (siehe z.B. FR1256940). Sie betrifft insbesondere eine Dreibackenspannvorrichtung zum Aufspannen von Rohren o. a. Bauteilen aus GFK oder anderen spröden Materialien.

Spannvorrichtungen der genannten Art sind in zahlreichen Ausführungsformen bekannt. Zu solchen Spannvorrichtungen, bei denen Spannbacken in Führungen verschiebbar geführt sind, existiert ein breiter Stand der Technik. Es gibt derartige Vorrichtungen in den verschiedensten Abmessungen, für die unterschiedlichsten Werkstücke, mit zahlreichen verschiedenen Betätigungsmöglichkeiten und einer Vielzahl von Einstellungsmöglichkeiten. Speziell bei der Bearbeitung von GFK oder anderen spröden Materialien auf solchen Spannvorrichtungen ergibt sich das Problem, dass bei der Bearbeitung feiner und feinster Staub entsteht, der sich in den Führungen der bekannten Spannvorrichtungen absetzt, von dort schlecht wieder entfernt werden kann, ohne die gesamte Spannvorrichtung demontieren zu müssen, und in vielen Fällen zum Verklemmen oder zumindest doch zur Schwergängigkeit der Vorrichtung führt.

Hier setzt die Erfindung an; Aufgabe der Erfindung ist es, eine Spannvorrichtung der genannten Art anzugeben, die auf einfache Weise sicherstellt, dass auch allerkleinste Partikel, feinster Schleifstaub, Diamantstaub usw. zuverlässig von den Führungen der Spannbacken ferngehalten wird. Damit soll es möglich sein, saubere Führungen und damit eine Leichtgängigkeit der Spannbacken auch nach langer Einsatzzeit sicherzustellen.

Diese Aufgabe wird durch die Erfindung gelöst.

Die Erfindung geht von der allgemeinen Idee aus, die relativ zu einem Grundkörper der Spannvorrichtung verschiebbaren Spannbacken bzw. Schieber dadurch abzudichten, dass eine feststehende Dichtung als ebene, plane Dichtungsfläche vorgesehen ist, auf der eine ebenso ebene Dichtung in Form einer Gleitplatte, die die Relativbewegung des Schiebers mitvollzieht, dichtend gleitet. Dies wird nach einem weiteren Merkmal der Erfindung dadurch erreicht, dass eine elastische O-Ring-Dichtung derart angeordnet ist, dass sie die Gleitplatte vollständig gegen die ebene Dichtungsfläche drückt. Durch das Aufeinandergleiten von zwei ebenen Dichtungsbestandteilen mit jeweils hochfeiner Oberfläche erfolgt ein zuverlässiges Abdichten der Führung. Durch die Elastizität der verwendeten O-Ring-Dichtung wird ständig ein Anpressdruck auf die beiden Dichtungen ausgeübt, ohne dass hierzu komplizierte Federmechanismen o. a. erforderlich sind. Zudem ist die erfindungsgemäße Spannvorrichtung einfach aufgebaut; sollten nach langer Betriebszeit die Dichtungsflächen verschlissen sein, lassen sie sich auf einfache Weise austauschen. Ebenso einfach ist eine nach langer Betriebsdauer möglicherweise verhärtete O-Ring-Dichtung, die keine oder nur noch unzureichende elastische Kräfte entwickelt, ohne weiteres austauschbar.

Die Erfindung soll nachfolgend beispielhaft an Hand von Zeichnungen noch näher erläutert werde.

Die Figuren zeigen:
- Figur 1: eine erfindungsgemäße Spannvorrichtung in perspektivischer Darstellung
- Figur 2: einen schematischen Längsschnitt durch einen der Schieber in dessen Bewegungsrichtung
- Figur 3: ein vergrößertes Detail aus der Darstellung in Figur 2 allein
- Figur 4: eine schematische Darstellung des Wirkprinzips der Erfindung, dargestellt als Querschnitt senkrecht zur Bewegungsrichtung des Schiebers
- Figur 5: die vollständige, in Figur 1 dargestellte Vorrichtung in seitlicher Schnittdarstellung
- Figur 6: eine schematische Darstellung dieser Vorrichtung mit zusätzlichen Rückstellmitteln im Inneren.

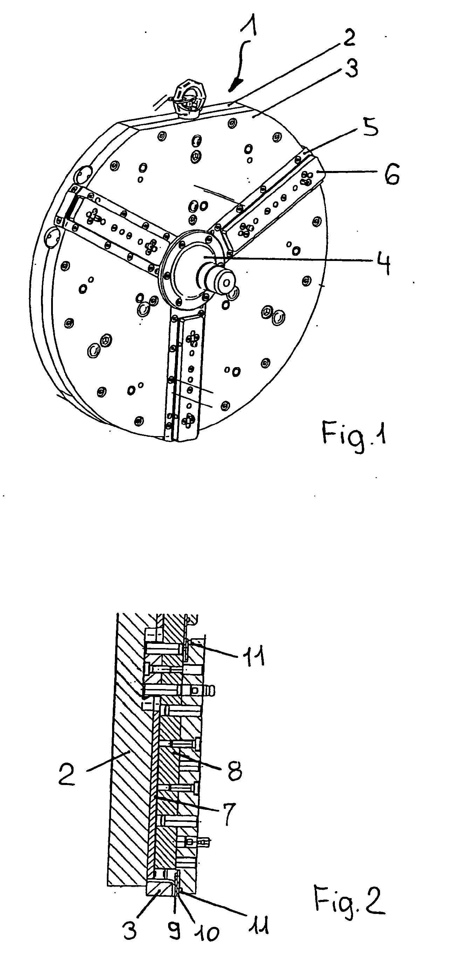

In Figur 1 ist eine vollständige Spannvorrichtung 1 gezeigt. Sie besteht aus zwei ebenen, miteinander verschraubten Platten, einer Grundplatte 2 und einer Deckplatte 3. Oberhalb der Deckplatte 3 ist eine zentrische Konusabdeckung 4 dargestellt. Unterhalb der Konusabdeckung 4 befindet sich ein Konus zur Betätigung der Vorrichtung, der hier nicht sichtbar ist und der später noch beschrieben werden wird. In Aussparungen der Deckplatte 3 sind drei Grundgehäuse 5 als jeweils eigenständige Baugruppen eingeschraubt. Die Grundgehäuse 5 besitzen an ihrer Oberseite jeweils eine freie Grundbacke 6. Diese Grundbacke ist jeweils radial verschiebbar; sie trägt Aufnahmemittel, an denen hier nicht gezeigte Spannmittel befestigt werden können.

Figur 2 zeigt ein solches Grundgehäuse mit den entsprechenden Bauteilen im Zusammenwirken mit Grundplatte 2 und Deckplatte 3 noch näher. Es ist zu sehen, dass die Grundbacke 6, die bereits erläutert wurde, in einer Führung 7, beispielsweise einer Flachführung, durch einen darin laufenden Schieber 8 geführt ist. Bei der Betätigung der Vorrichtung, die noch näher erläutert wird, werden die Schieber radial nach außen gedrückt, dabei bewegen sie sich in der jeweiligen Führung 7. Diese Bewegung vollzieht auch die jeweilige Grundbacke 6, die mit dem Schieber 8 verschraubt ist. An der Deckplatte 3 ist eine feststehende Dichtung 9 vorgesehen; dies ist eine ebene, umlaufende metallische Oberfläche. Weiterhin ist an der Grundbacke 6 eine korrespondierende Dichtung in Form einer Gleitplatte 10 vorgesehen, die die Relativbewegung von Schieber 8 und Grundbacke 6 mitvollzieht. Mit anderen Worten: Bei der Betätigung der Vorrichtung und radialer Bewegung der Schieber 8 gleitet die sich mitbewegende Gleitplatte 10 auf der feststehenden korrespondierenden Dichtung 9. Die Gleitplatte 10 ist besonders vorteilhaft als separates, ebenes, starres Bauteil mit einer umlaufenden, geschlossenen Kontur ausgebildet, wobei diese Kontur die Führung 7 umschließt. Durch die Ausführung der Gleitplatte 10 als separates Bauteil ist deren besonders einfache Montage bzw. Austausch bei Verschleiß möglich.
Oberhalb der Gleitplatte 10, an deren von der Dichtung 9 abgewandten Seite, ist eine umlaufende O-Ring-Dichtung 11 vorgesehen, die derart bei der Montage gepresst wird, dass sie elastische Kräfte entwickelt, die die Gleitplatte 10 gegen die korrespondierende Dichtung 9 drücken. Damit erfolgt eine zuverlässige Abdichtung der inneren Führung 7, in der der Schieber 8 läuft. Es können also keinerlei Partikel, wie fein sie auch immer sein mögen, in den Bereich der Führung 7 eindringen.

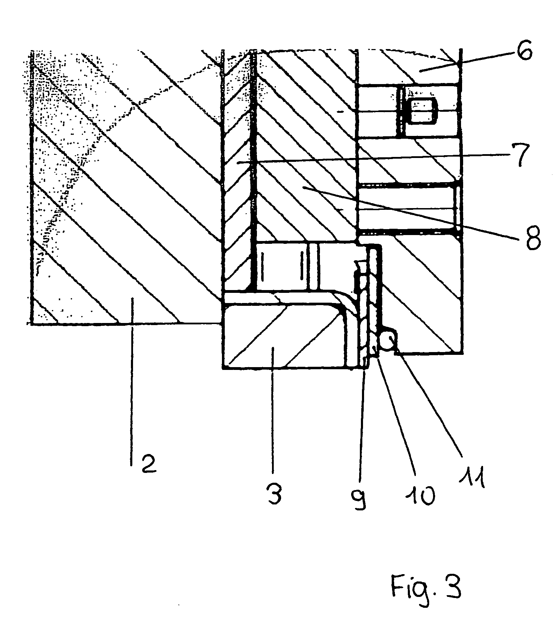

Figur 3 zeigt einige der eben in Figur 2 beschriebenen Einzelteile noch einmal vergrößert. Hier ist besonders gut zu sehen, wie die feststehende ebene Dichtung 9 und die bewegliche ebene Dichtung 10, auf die der elastische Anpressdruck, verursacht durch die O-Ring-Dichtung 11, wirkt, zusammenwirken. Sowohl die Dichtung 9 als auch die als Gleitplatte 10 ausgeführte Dichtung 10 sind räumlich umlaufend ausgebildet, derart, dass sie die gesamte Führung 7 als geschlossene Bahn umschließen. Ebenso ist dies bei der O-Ring-Dichtung 11.

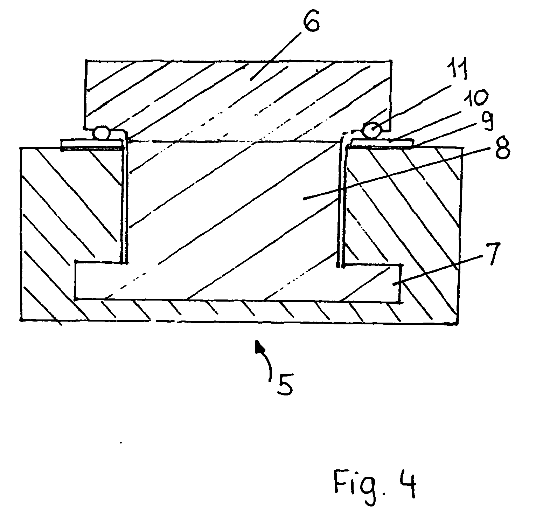

Figur 4 zeigt noch einmal dieses Prinzip in schematischer Schnittdarstellung senkrecht zur Betätigungsrichtung des Schiebers 8. Auch aus dieser Darstellung wird deutlich, dass der erfindungsgemäße Dichtungsverbund die Führung 7 vollständig umschließt und hermetisch abdichtet. Bei dieser Ausführungsform steht die Gleitplatte 10 direkt mit dem oberen Bereich des Schiebers 8, der der Deckplatte 3 und damit der Dichtung 9 zugewandt ist, in Verbindung. Die Wirkung des Dichtungsverbundes ist identisch.

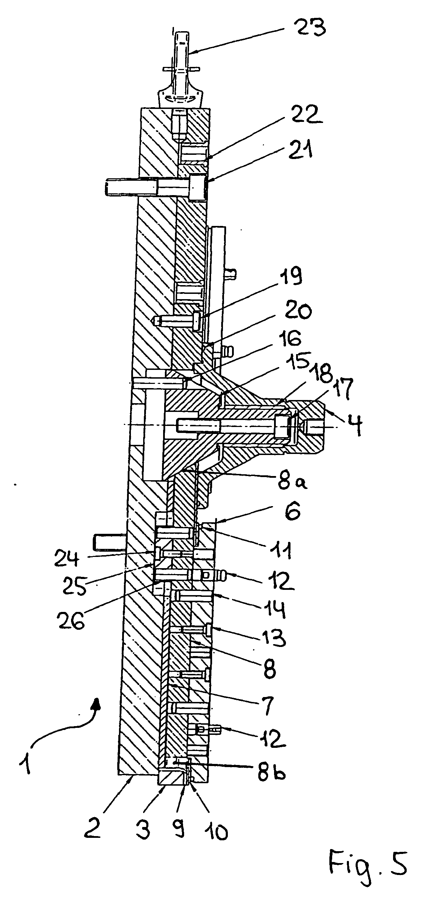

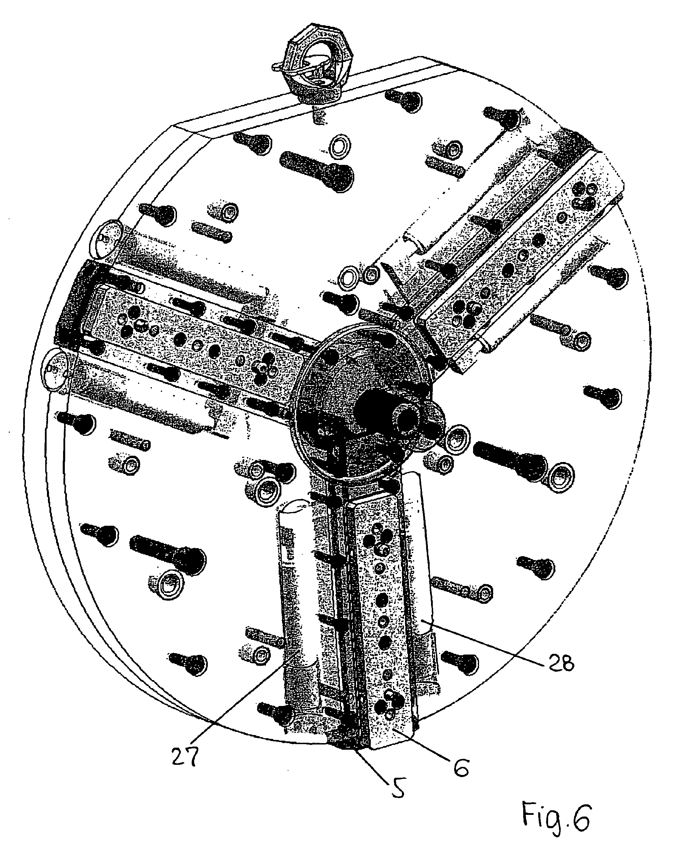

Figur 5 zeigt noch einmal eine vollständige erfindungsgemäße Spannvorrichtung in seitlicher Schnittdarstellung. Außer den bereits erläuterten Bezugszeichen 2...11 sind hier noch weitere konstruktive Details dargestellt, die zum Verständnis der Funktion der gesamten Vorrichtung notwendig sind und nachfolgend erläutert werden.
Es sind Aufnahmebolzen 12 gezeigt, die auf der Grundplatte 6 aufgebracht sind und an der spezielle Befestigungsmittel für die Befestigung der jeweils konkret zu bearbeitenden Werkstücke angebracht werden können. Weiterhin ist eine Schraube 13 dargestellt, mittels der die Grundbacke 6 am Schieber 8 befestigt ist. Ein Zylinderstift 14 dient zur genauen Positionierung bei der Montage. Im Zentrum der Vorrichtung ist jetzt ein Spannkegel 15 gezeigt, der eine konusförmige Kontur aufweist. In Figur 1 war nur die Konusabdeckung oberhalb dieses Spannkegels zu sehen. Der Spannkegel 15 wird bei Betätigung der Vorrichtung durch hier nicht dargestellte z. B. hydraulische Betätigungsmittel in waagerechter Richtung - bezogen auf die Darstellung in Figur 5 - bewegt. Dadurch verschiebt sich die relative Lage des Konus des Spannkegels. Auf diesem Konus laufen formschlüssig entsprechend geformte stirnseitige Konturen 8a der jeweiligen Schieber 8. Bei der Betätigung des Spannkegels 15, d. h. seiner Bewegung nach rechts in der Zeichnung, werden also durch die auf dem Konus laufenden Stirnflächen 8a die jeweiligen Schieber 8 nach außen gedrückt. Damit sie diese Bewegung vollziehen können, sind am anderen Ende der Führung freie Räume 8b vorgesehen. Gezeigt sind weiterhin Zylinderstift 16, Schraube 17 und Buchse 18; die beiden letztgenannten Bauteile in Verbindung mit dem Spannkegel. Eine weitere Schraube 19 dient zur Verbindung der Deckplatte 3 mit der Grundplatte 2. Die Konusabdeckung 4 ist durch eine weitere O-Ring-Dichtung 20 abgedichtet montiert. Eine weitere Schraube 21 dient zur Befestigung der gesamten Vorrichtung. Ebenfalls gezeigt ist eine Bundbohrbuchse 22 sowie eine Halterung 23 zur Handhabung der gesamten Vorrichtung. Im unteren Bereich sind noch eine montierte Schraube 24 und ein eingelegter Balken 25 dargestellt, ebenso wie ein Zylinderstift 26, auf dem der bereits beschriebene Aufnahmebolzen 12 montiert ist. Auch hier sind wiederum im unteren Bereich die Dichtung 9, die korrespondierende dichtende Gleitplatte 10 und die O-Ring-Dichtung zur Erzeugung des notwendigen Anpressdruckes gezeigt. Es wurde erläutert, dass die Betätigung der Spannvorrichtung durch senkrechte Bewegung des Spannkegels, relativ zur Schieberichtung der Schieber 8, die radial nach außen gedrückt werden, erfolgt. Soll die Spannvorrichtung wieder entspannt werden, d. h. ein darauf gespanntes Werkstück gelöst werden, wird der Spannkegel in der entgegengesetzten Richtung bewegt. Um sicherzustellen, dass die Schieber 8 mit den Grundbacken 6 dieser entspannenden Bewegung folgen und der Formschluss zwischen Spannkegel 15 und den jeweiligen Stirnflächen 8a bestehen bleibt, sind an jedem Schieber beidseitige Gasdruckfedern 27, 28 auf an sich bekannte Weise angeordnet, die dies sicherstellen. Dies ist in Figur 6 schematisch gezeigt; auf die nochmalige Bezeichnung und Erläuterung der übrigen, bereits beschriebenen Bauteile wurde verzichtet.

## Patentansprüche

1. Spannvorrichtung zum Aufspannen von Werkstücken an Werkzeugmaschinen,
wobei in einem Grundkörper radiale Führungen vorgesehen sind, in denen radial verschiebbare Schieber geführt sind,
wobei durch zentrisch im Grundkörper angeordnete Betätigungsmittel die Schieber zum Spannen der Vorrichtung nach außen bewegbar sind,
**dadurch gekennzeichnet,**
**dass** der Grundkörper aus zwei ebenen, miteinander verschraubten Platten, nämlich einer Grundplatte (2) und einer Deckplatte (3), besteht,
**dass** die Führungen (7) und die darin geführten Schieber (8) als jeweils separat montierbare Grundgehäuse (5) ausgebildet sind, die jeweils in entsprechende Aussparungen der Deckplatte (3) einschraubbar sind,
**dass** der Schieber (8) selbst oder ein an ihm fest montiertes weiteres Bauteil oberhalb des Bereiches der Führung die Kontur der Führung (7) allseitig abdeckt,
**dass** der die jeweilige Führung umlaufende Bereich der Oberfläche der Deckplatte (3) als jeweils ebene, feststehende Dichtungsfläche (9) ausgebildet ist,
**dass** an der unteren, der Oberfläche der Deckplatte (3) zugewandten Seite des Schiebers (8) eine korrespondierende ebene Dichtung (10) als separates Bauteil vorgesehen ist, die mit dem Schieber (8) bewegt wird
und **dass** oberhalb der Dichtung (10), an ihrer der korrespondierenden Dichtungsfläche (9) abgewandten Seite, eine umlaufende O-Ring-Dichtung (11) unter Vorspannung montiert ist, derart, dass die separate Dichtung (10) ständig gegen die Dichtungsfläche (9) gedrückt wird.

2. Spannvorrichtung nach Anspruch 1,
**dadurch gekennzeichnet,**
**dass** das am Schieber (8) fest montierte weitere Bauteil eine Grundbacke (6) ist, die an sich bekannte Befestigungs- und/oder Spannmittel (12) trägt.

## Claims

1. Clamping device for clamping workpieces at machine tools,
wherein radial guides in which radially displaceable slides are guided are provided in a base body and
wherein the slides are, for clamping the device, movable outwardly by actuating means arranged centrally in the base body,
**characterised in that**
the base body consists of two planar plates screw-connected together, namely a base plate (2) and a top plate (3),
the guides (7) and the slides (8) guided therein are constructed as respective separately mountable base housings (5) which can be respectively screwed into corresponding recesses of the top plate (3),
the slide (8) itself or a further component fixedly mounted thereon above the region of the guide covers the contour of the guide (7) at all sides,
the region, which encircles the respective guide, of the surface of the top plate (3) is constructed as a respective planar, stationary sealing surface (9),
a corresponding planar seal (10), which is moved with the slide (8), is provided as a separate component at the lower side, which faces the surface of the top plate (3), of the slide (8) and
an encircling O-ring seal (11) is so mounted under bias above the seal (10) at its side remote from the corresponding sealing surface (9) that the separate seal (10) is constantly pressed against the sealing surface (9).

2. Clamping device according to claim 1, **characterised in that** the further component fixedly mounted on the slide (8) is a base jaw (6) carrying fastening and/or clamping means (12) which are known per se.

## Revendications

1. Dispositif de serrage pour brider des pièces sur des machines-outils, ayant :
- un corps de base comportant des guides radiaux recevant des tiroirs coulissant radialement, et
- des moyens d'actionnement installés en position centrale dans le corps de base déplaçant vers l'extérieur les tiroirs pour serrer le dispositif,
**caractérisé en ce que**
- le corps de base se compose de deux plaques vissées l'une à l'autre, à savoir une plaque de base (2) et une plaque de couverture (3),
- les guides (7) et les tiroirs (8) guidés dans ceux-ci sont réalisés sous la forme d'un boîtier de base (5), chacun étant monté séparément et se vissant dans une réservation correspondante de la plaque de couverture (3),
- les tiroirs (8), eux-mêmes ou par une autre pièce solidaire de ceux-ci, couvrent de tout côté le contour du guide (7) au-dessus de la zone de guidage,
- la zone de la surface de la plaque de couverture (3) entourant chaque guide est sous la forme d'une surface d'étanchéité (9), plane, fixe,
- le côté inférieur du tiroir (8) tourné vers la surface supérieure de la plaque de couverture (3) comporte un joint plan (10) correspondant, comme pièce séparée, mobile avec le tiroir (8), et
- au-dessus du joint (10), son côté tourné vers la surface d'étanchéité (9) correspondante, reçoit un joint torique périphérique (11) monté sous précontrainte de façon que le joint (10), séparé, soit en permanence poussé contre la surface d'étanchéité (9).

2. Dispositif de serrage selon la revendication 1,
**caractérisé en ce que**
le tiroir (8) comporte comme autre pièce montée de manière fixe, un mors (6) portant des moyens de serrage et/ou de fixation (12), connus en soi.
